# EUROPÄISCHE PATENTSCHRIFT

(11) **EP 2 681 519 B1**
(45) Veröffentlichungstag und Bekanntmachung des Hinweises auf die Patenterteilung: **05.08.2020**
(21) Anmeldenummer: 12711357.9
(22) Anmeldetag: 01.03.2012
(51) Int. Cl.: G01F 23/296, G01N 29/024

(54) **ANORDNUNG UND VERFAHREN ZUR ERMITTLUNG EINER KONZENTRATION EINES BESTANDTEILS EINES FLUIDGEMISCHES**
ARRANGEMENT AND METHOD FOR DETERMINING A CONCENTRATION OF A CONSTITUENT OF A FLUID MIXTURE
SYSTÈME ET PROCÉDÉ POUR DÉTERMINER UNE CONCENTRATION D'UN INGRÉDIENT D'UN MÉLANGE DE FLUIDES

(30) Priorität: 03.03.2011 DE 102011012992
(43) Veröffentlichungstag der Anmeldung: 08.01.2014
(73) Patentinhaber: Vitesco Technologies GmbH, 30165 Hannover (DE)
(72) Erfinder: HEINRICH, Stephan, 84076 Pfeffenhausen (DE); HERRMANN, Markus, 93051 Regensburg (DE); REITMEIER, Torsten, 92442 Wackersdorf (DE); SCHÄDLICH, Denny, 08223 Neustadt (DE)
(74) Vertreter: Waldmann, Georg Alexander
(86) Internationale Anmeldenummer: PCT/EP2012/053510
(87) Internationale Veröffentlichungsnummer: WO 2012/117052

(56) Entgegenhaltungen:
- DE-A1- 19 846 023
- US-A- 5 650 571
- US-A- 5 793 705
- US-A1- 2006 192 567
- BAMBERGER J A ET AL: "Measuring fluid and slurry density and solids concentration non-invasively", ULTRASONICS, IPC SCIENCE AND TECHNOLOGY PRESS LTD. GUILDFORD, GB, Bd. 42, Nr. 1-9, 1. April 2004 (2004-04-01), Seiten 563-567, XP004499894, ISSN: 0041-624X, DOI: 10.1016/J.ULTRAS.2004.01.032 in der Anmeldung erwähnt

## Beschreibung

Die Erfindung betrifft ein Verfahren zur Ermittlung einer Konzentration eines Bestandteils eines Fluidgemisches. Weiterhin betrifft die Erfindung eine entsprechende Anordnung zur Ermittlung einer Konzentration eines Bestandteils eines Fluidgemisches.

Mit Hilfe von Ultraschall ist es möglich, Flüssigkeiten anhand ihrer charakteristischen Schallgeschwindigkeit zu identifizieren (Impuls-Echo-Verfahren). Dazu wird die Laufzeit gemessen, die der Ultraschall für einen vorgegebenen Laufweg benötigt. Zur Unterscheidung von verschiedenen Konzentrationen eines Flüssigkeitsgemisches oder von verschiedenen Flüssigkeiten wird der Unterschied in der Laufzeit ausgewertet. Dieser Unterschied in der Laufzeit liegt im Mikrosekundenbereich. Je länger die Laufzeit desto größer ist der Unterschied in der Laufzeitdifferenz bei gleichen Konzentrationen.

In Kraftfahrzeugen wird das Impuls-Echo-Verfahren beispielsweise zur Füllstandsmessung zur Ermittlung einer Menge eines Fluids in einem Tank verwendet. Weiterhin wird das Impuls-Echo-Verfahren verwendet um die Konzentration von Fluidgemischen, insbesondere Zwei-Komponenten-Gemischen, zu ermitteln.

Um eine möglichst gute Auflösung in der Konzentration zu bekommen, ist es notwendig, einen möglichst langen Laufweg bereitzustellen.

B. Henning, et. al. "In-line concentration measurement in complex liquids using ultrasonic sensors", Ultrasonics (2000) 799 - 803 sowie J.A. Bamberger, M.S. Greenwood "Measuring fluid and slurry density and solids concentration non-invasively", Ultrasonics, 42 (2004) 563 - 567 beschreiben jeweils ein Sensorsystem zur Charakterisierung von Flüssigkeitsmischungen, bei denen jeweils zur Messung ein Ultraschallimpuls abwechselnd an zwei gegenüberliegend angeordneten Schallwandlern reflektiert wird, und die Reflexionen ausgewertet werden.

Es ist wünschenswert, ein Verfahren sowie eine entsprechende Anordnung anzugeben, das beziehungsweise die eine Verkleinerung des Bauraums sowie eine hohe Genauigkeit in der Auswertung ermöglichen.

Die Erfindung zeichnet sich aus durch ein Verfahren entsprechend dem unabhängigen Anspruch 1 sowie eine Anordnung ensprechend dem unabhängigen Anspruch 2, zum Durchführen des Verfahrens eingerichtet ist.

In einer Ausführungsform wird zur Ermittlung einer Konzentration eines Bestandteils eines Fluidgemisches in einem Fluidraum ein Ultraschallimpuls in das Fluidgemisch ausgesendet. Eine Reflexion des Ultraschallimpulses wird als Messsignal empfangen, nachdem der Ultraschallimpuls an mindestens zwei Impedanzsprüngen reflektiert wurde Die Konzentration des Bestandteils des Fluidgemisches wird in Abhängigkeit des Messsignals ermittelt.

Die Geometrie des Fluidraums ist insbesondere durch die Einbausituation der Anordnung vorgegeben. Der Gesamtweg, der von dem Ultraschallimpuls zwischen dem Aussenden und dem Empfangen der Reflexion zurückgelegt wird, wird durch die Reflexion an mindestens zwei Impedanzsprüngen in der vorgegebenen Geometrie des Fluidraums verlängert. Damit verlängert sich auch die Laufzeit des Ultraschallimpulses zwischen dem Aussenden und dem Empfangen. Dadurch wird die Genauigkeit beim Ermitteln der Konzentration des Bestandteils des Fluidgemisches in der vorgegebenen Geometrie des Bauraums im Vergleich zu einer einfachen Reflexion an nur einem Impedanzsprung erhöht.

Bei einer vorgegebenen Genauigkeit zur Ermittlung der Konzentration ist es möglich, den Fluidraum zu verkleinern und trotzdem die Genauigkeit beizubehalten.

Gemäß der Erfindung wird die Reflexion empfangen, nachdem der Ultraschallimpuls an den mindestens zwei Impedanzsprüngen abwechselnd jeweils mehrmals reflektiert wurde, sodass der Ultraschallimpuls insgesamt mindestens elf Mal reflektiert wird. Es wird also die Reflexion empfangen, nachdem der Ultraschallimpuls an dem ersten Impedanzsprung der zwei Impedanzsprünge, an dem er zuerst reflektiert wird, sechs Mal reflektiert wurde, und jeweils zwischen zwei Reflexionen an dem ersten Impedanzsprung an dem zweiten Impedanzsprung der zwei Impedanzsprünge reflektiert wurde.

Dadurch kann der Gesamtweg und damit die Laufzeit weiter verlängert werden, wodurch die Genauigkeit bei der Ermittlung der Konzentration weiter erhöht wird beziehungsweise der Fluidraum weiter verkleinerbar ist.

Die Anordnung umfasst in Ausführungsformen einen Ultraschallwandler und eine Steuereinheit zum Betreiben des Ultraschallwandlers. Der Ultraschallwandler ist eingerichtet zum Aussenden des Ultraschallimpulses in das Fluidgemisch. Der Ultraschallwandler ist weiterhin eingerichtet zum Empfangen der Reflexion als Messsignal. Die Steuereinheit ist eingerichtet, ein Signal für den Ultraschallwandler bereitzustellen, so dass der Ultraschallwandler den Ultraschallimpuls aussendet. Weiterhin ist die Steuereinheit eingerichtet, in Abhängigkeit des Messsignals die Konzentration des Bestandteils des Fluidgemisches zu ermitteln.

Die zwei Impedanzsprünge sind so angeordnet, dass der Ultraschallimpuls an dem ersten Impedanzsprung so reflektiert wird, dass der Ultraschallimpuls nach der Reflexion an dem Impedanzsprung auf den weiteren Impedanzsprung trifft. Die mindestens zwei Impedanzsprünge sind weiterhin so angeordnet, dass der Ultraschallimpuls an dem weiteren Impedanzsprung so reflektiert wird, dass der Ultraschallimpuls nach der Reflexion an dem weiteren Impedanzsprung wiederum auf den Impedanzsprung trifft. Dadurch ist es möglich, dass bei zwei Impedanzsprüngen der Ultraschall öfters als zwei Mal reflektiert wird, wodurch der Gesamtweg und damit die Laufzeit des Ultraschallimpulses verlängerbar ist.

Insbesondere ist der weitere Impedanzsprung im Fluidraum örtlich in einem Bereich des Ultraschallwandlers angeordnet. Beispielsweise ist der weitere Impedanzsprung an einer Oberfläche des Ultraschallwandlers, so dass der Ultraschallimpuls an dem Ultraschallwandler reflektiert wird.

Weitere Vorteile, Merkmale und Weiterbildungen ergeben sich aus dem nachfolgenden in Verbindung mit der Figur erläuterten Beispiel. Die dargestellten Elemente und deren Größenverhältnis zueinander sind grundsätzlich nicht als maßstabsgerecht anzusehen.

Es zeigen:
- Figur 1: eine schematische Darstellung einer Anordnung gemäß einer Ausführungsform,
- Figur 2: den Verlauf der empfangenen Reflexionen und
- Figur 3: eine schematische Darstellung einer Anordnung gemäß einer weiteren Ausführungsform.

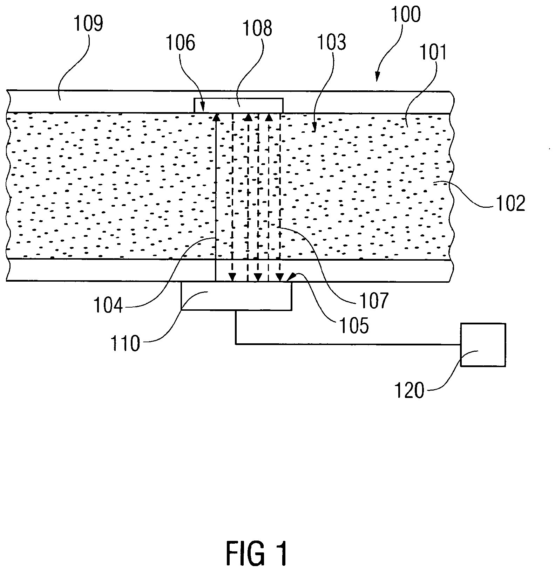

Figur 1 zeigt eine schematische Darstellung einer Anordnung 100. Die Anordnung 100 umfasst einen Ultraschallwandler 110. Die Anordnung 100 umfasst weiterhin eine Steuereinheit 120 zum Betreiben des Ultraschallwandlers 110.

Der Ultraschallwandler 110 ist eine Ultraschallquelle, die ebenfalls als Ultraschallempfänger dient. In Ausführungsformen sind die Ultraschallquelle und der Ultraschallempfänger getrennte Bauelemente.

Die Steuereinheit 120 ist mit dem Ultraschallwandler 110 gekoppelt. Die Steuereinheit 120 ist eingerichtet, Signale zum Betreiben des Ultraschallwandlers 110 bereitzustellen, so dass der Ultraschallwandler 110 in Abhängigkeit der Signale einen Ultraschallimpuls aussendet. Weiterhin ist die Steuereinheit 120 eingerichtet, Messsignale von dem Ultraschallwandler zu empfangen.

Der Ultraschallwandler 110 ist an einem Fluidraum 103 angeordnet. Der Fluidraum ist von Wänden 109 umgeben. Der Fluidraum ist zumindest teilweise mit einem Fluidgemisch 101 gefüllt. Das Fluidgemisch 101 umfasst beispielsweise zwei Bestandteile. Die Konzentration eines Bestandteils 102 der zwei Bestandteile wird ermittelt. Beispielsweise ist das Fluidgemisch eine Mischung aus Harnstoff und Wasser, die zur Nachbehandlung von Abgasen eines Kraftfahrzeugs in einem SCR-Katalysator verwendet wird (SCR: Selektive Katalytische Reduktion, englisch: selective catalytic reduction) . Der Bestandteil 102 des Fluidgemisches 101 ist in diesem Beispiel der Harnstoff.

In dem Fluidraum 103 sind zwei Impedanzsprünge 105 und 106 angeordnet. Der erste Impedanzsprung 105 ist im gezeigten Ausführungsbeispiel die dem Fluidraum 103 zugewandte Oberfläche des Ultraschallwandlers 110. Der zweite Impedanzsprung 106 ist im Fluidraum gegenüber dem ersten Impedanzsprung 105 angeordnet, so dass ein Ultraschallimpuls 104, der von dem Ultraschallwandler 110 ausgesendet wird, zwischen den beiden Impedanzsprüngen 105 und 106 hin und her reflektiert wird.

Der Ultraschallwandler 110 ist an einer der Wände 109 angeordnet und sendet den Ultraschallimpuls durch die Wand in das Fluidgemisch 101.

Von dem Ultraschallwandler 110 wird der Ultraschallimpuls 104 ausgesendet, der an dem Impedanzsprung 106 zurück zu dem Ultraschallwandler 110 beziehungsweise dem Impedanzsprung 105 reflektiert wird. Als Impedanzsprung 106 dient erfindungsgemäß ein an der dem Ultraschallwandler 110 gegenüberliegenden Wand 109 des Fluidraums 103 zur, Verstärkung der Reflexion angeordneter Schallreflektor 108 .

Nachdem der Ultraschallimpuls an dem Impedanzsprung 106 reflektiert wurde, wird er zu dem Impedanzsprung 105 reflektiert. Der Ultraschallimpuls wird an dem Impedanzsprung 105 so reflektiert, dass er wieder auf den Impedanzsprung 106 trifft, an dem er ein weiteres Mal reflektiert wird. Daraufhin trifft der Ultraschallimpuls ein zweites Mal auf den Ultraschallwandler 110. Dies wiederholt sich, bis der Ultraschallimpuls abgeklungen ist.

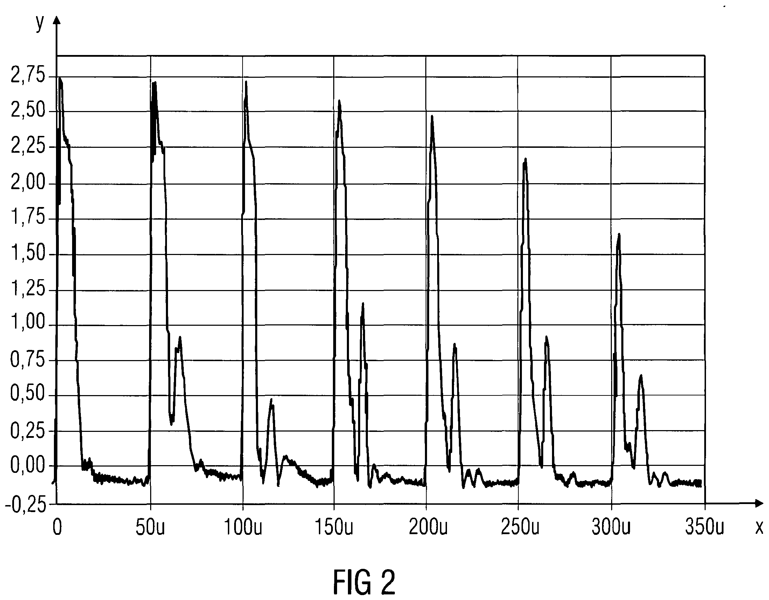

Das Aussenden und das Empfangen der ersten sechs Reflexionen von dem Ultraschallwandler 110 ist in Figur 2 dargestellt. Im Bereich von etwa 0 Sekunden bis etwa 20 Mikrosekunden wird der Ultraschallimpuls 104 aussendet. Die erste Reflexion erreicht den Sensor nach circa 50 Mikrosekunden. Die weiteren Reflexionen erreichen den Ultraschallwandler 110 etwa alle 50 Mikrosekunden. Die Steuereinheit 120 ermittelt die Konzentration des Bestandteils 102 des Fluidgemisches 101 in Abhängigkeit eines Messsignals, das aus einer empfangenen Reflexion 107 stammt, die sowohl mindestens ein Mal an dem Impedanzsprung 106 als auch mindesten ein Mals an dem Impedanzsprung 105 reflektiert wurde. Die Steuereinheit 120 ermittelt die Konzentration des Bestandteils 102 des Fluidgemisches 101 in Abhängigkeit eines Messsignals, das erfindungsgemäß aus der elften oder einer nachfolgenden empfangenen Reflexion stammt.

Die Gesamtwegstrecke, die der Ultraschallimpuls zwischen dem Aussenden und dem Empfangen der Reflexion, die von der Steuereinheit 120 verwendet wird, zurücklegt, ergibt sich aus der Reflexion, die zur Auswertung verwendet wird. Wird nicht erfindungsgemäß die zweite eintreffende Reflexion zur Ermittlung der Konzentration des Bestandteils verwendet, ist der Gesamtweg das Vierfache des Abstands zwischen den beiden Impedanzsprüngen 105 und 106. Wird nicht erfindungsgemäß die sechste eintreffende Reflexion zur Auswertung verwendet, ist der Gesamtweg das Zwölffache des Abstands zwischen den beiden Impedanzsprüngen 105 und 106. Beträgt der Abstand beispielsweise 36 Millimeter, beträgt der Gesamtweg bei einer Auswertung der sechsten eingetroffenen Reflexion 432 Millimeter.

Allgemein ist der Gesamtweg das Zweifache des Abstandes zwischen den beiden Impedanzsprüngen 105 und 106 mal der Nummer der empfangenen Reflexion, die zur Ermittlung der Konzentration des Bestandteils 102 des Fluidgemisches 101 verwendet wird.

Von der Steuereinheit 120 wird die Laufzeit gemessen, die zwischen dem Aussenden des Ultraschallimpulses 104 und dem Empfangen der Reflexion 107 liegt. Die Reflexion 107 ist die empfangene Reflexion, die als Messsignal zur Ermittlung der Konzentration des Bestandteils 102 verwendet wird. Aus der gemessenen Laufzeit und dem ermittelten Gesamtweg wird die Schallgeschwindigkeit in dem Fluidgemisch 101 ermittelt. Die Schallgeschwindigkeit ist charakteristisch für die Konzentration des Bestandteils 102 in dem Fluidgemisch 101, so dass aus der Schallgeschwindigkeit die Konzentration des Bestandteils ermittelbar ist.

In Ausführungsformen ist die Nummer der empfangen Reflexion 107, die Ermittlung der Konzentration verwendet wird, vorgegeben. Damit ist der Gesamtweg bekannt, so dass die Konzentration in Abhängigkeit der Laufzeit ermittelt wird.

Durch die Verwendung der elften eintreffenden Reflexion als Messsignal zur Ermittlung der Konzentration oder einer nachfolgenden eintreffenden Reflexion als Messsignal wird der Gesamtweg und damit die Laufzeit des Ultraschallimpulses erhöht im Vergleich zu einem herkömmlichen Verfahren, bei dem die erste eintreffende Reflexion verwendet wird. Somit ist die Genauigkeit beim Ermitteln der Konzentration erhöht, da mit einer längeren Laufzeit die Laufzeitunterschiede bei unterschiedlichen Konzentrationen des Bestandteils größer sind.

Bei gleichbleibender vorgegebener Genauigkeit ist es möglich, durch die Auswertung der zweite oder einer späteren eintreffenden Reflexion den Bauraum des Fluidraums 103 zu verkleinern, beispielsweise den Abstand zwischen den beiden Impedanzsprüngen 105 und 106 zu verringern.

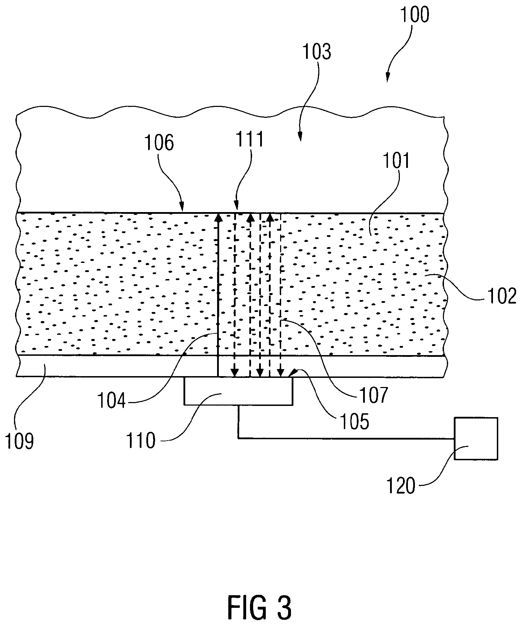

Figur 3 zeigt die Anordnung 100 der Figur 1 gemäß einer nicht erfindungsgemäßen Ausführungsform. Im Unterschied zu Figur 1 ist der Impedanzsprung 106 nicht an einer gegenüberliegenden Wand des Fluidraums angeordnet, sondern ist ein Übergang 111 des Fluidgemisches 101 zu einem anderen Medium, insbesondere zu Luft. Gemäß diesem Ausführungsbeispiel werden der Ultraschallwandler 110 und die Steuereinrichtung 120 zusätzlich zur Konzentrationsermittlung auch zur Ermittlung des Füllstandes des Fluidgemisches 101 in dem Fluidraum 103 verwendet.

## Patentansprüche

1. Verfahren zur Ermittlung einer Konzentration eines Bestandteils (102) eines Fluidgemisches (101) in einem Fluidraum (103), umfassend:
- Aussenden eines Ultraschallimpulses (104) in das Fluidgemisch (101) mittels eines Ultraschallwandlers (110),
- Empfangen einer Reflexion (107) des Ultraschallimpulses (104) als Messsignal, nachdem der Ultraschallimpuls (104) an mindestens zwei Impedanzsprüngen (105; 106) reflektiert wurde,
- Empfangen der Reflexion (107), nachdem der Ultraschallimpuls (104) an den mindestens zwei Impedanzsprüngen (105; 106) abwechselnd insgesamt mindestens 11 Mal reflektiert wurde, wobei die Reflexion (107) zur Verstärkung an einem Schallreflektor (108) reflektiert wurde und der Ultraschallwandler (110) und der Schallreflektor (108) an gegenüberliegenden Wänden (109) des Fluidraums (103) angeordnet. sind, und
- Ermitteln der Konzentration des Bestandteils (102) des Fluidgemisches (101) in Abhängigkeit des Messsignals.

2. Anordnung aus einem Ultraschallwandler (110) und einem Schallreflektor (108) zur Reflexionsverstärkung, die an gegenüberliegenden Wänden (109) eines Fluidraums (103) angeordnet sind, und einer Steuereinheit (120) zum Betreiben des Ultraschallwandlers (110), wobei die Anordnung eingerichtet ist zum Durchführen eines Verfahrens gemäß Anspruch 1.

3. Anordnung nach Anspruch 2, bei der die mindestens zwei Impedanzsprünge (105; 106) so angeordnet sind, dass der Ultraschallimpuls (104) an dem Impedanzsprung (106) so reflektiert wird, dass der Ultraschallimpuls (104) nach der Reflexion an dem Impedanzsprung (106) auf den weiteren Impedanzsprung (105) trifft.

4. Anordnung nach Anspruch 2 oder 3, bei der die mindestens zwei Impedanzsprünge (105; 106) so angeordnet sind, dass der Ultraschallimpuls (104) an dem weiteren Impedanzsprung (105) so reflektiert wird, dass der Ultraschallimpuls (104) nach der Reflexion an dem weiteren Impedanzsprung (105) wiederum auf den Impedanzsprung (106) trifft.

5. Anordnung nach einem der Ansprüche 2 bis 4, bei der der Ultraschallimpuls (104) von dem Ultraschallwandler (110) ausgesendet wird, der an dem Fluidraum (103) angeordnet ist, und die Reflexion (107) von dem Ultraschallwandler (110) empfangen wird, wobei der weitere Impedanzsprung (105) im Fluidraum örtlich in einem Bereich des Ultraschallwandlers (110) angeordnet ist.

6. Anordnung nach einem der Ansprüche 2 bis 5, bei der zwischen dem Ultraschallwandler (110) und dem Impedanzsprung (106) ein Abstand ist und die Steuereinheit (120) eingerichtet ist, die Konzentration des Bestandteils (102) des Fluidgemisches (101) in Abhängigkeit von einem Gesamtweg zu ermitteln, der sich ergibt aus dem Abstand und der Anzahl der Reflexionen an den mindestens zwei Impedanzsprüngen (105; 106).

7. Anordnung nach einem der Ansprüche 2 bis 6, bei der Ultraschallwandler (110) so angeordnet ist, dass der Ultraschallimpuls (104) an einer Wand (109) des Fluidraums (103) reflektiert wird.

## Claims

1. Method for determining a concentration of a constituent (102) of a fluid mixture (101) in a fluid space (103), comprising:
- emission of an ultrasound pulse (104) into the fluid mixture (101) by means of an ultrasonic transducer (110),
- reception of a reflection (107) of the ultrasound pulse (104) as a measurement signal after the ultrasound pulse (104) has been reflected at at least two impedance discontinuities (105; 106),
- reception of the reflection (107) after the ultrasound pulse (104) has been reflected alternately at least 11 times in total at the at least two impedance discontinuities (105; 106), wherein the reflection (107) was reflected for amplification at a sound reflector (108), and the ultrasonic transducer (110) and the sound reflector (108) are arranged on opposite walls (109) of the fluid space (103), and
- determination of the concentration of the constituent (102) of the fluid mixture (101) as a function of the measurement signal.

2. Arrangement consisting of an ultrasonic transducer (110) and a sound reflector (108) for reflection amplification, which are arranged on opposite walls (109) of a fluid space (103), and a control unit (120) for operating the ultrasonic transducer (110), the arrangement being adapted to carry out a method according to Claim 1.

3. Arrangement according to Claim 2, in which the at least two impedance discontinuities (105; 106) are arranged so that the ultrasound pulse (104) is reflected at the impedance discontinuity (106) in such a way that the ultrasound pulse (104) strikes the further impedance discontinuity (105) after reflection at the impedance discontinuity (106).

4. Arrangement according to Claim 2 or 3, in which the at least two impedance discontinuities (105; 106) are arranged so that the ultrasound pulse (104) is reflected at the further impedance discontinuity (105) in such a way that the ultrasound pulse (104) strikes the impedance discontinuity (106) again after reflection at the further impedance discontinuity (105).

5. Arrangement according to one of Claims 2 to 4, in which the ultrasound pulse (104) is emitted by the ultrasonic transducer (110), which is arranged on the fluid space (103), and the reflection (107) is received by the ultrasonic transducer (110), the further impedance discontinuity (105) being arranged locally in a region of the ultrasonic transducer (110) in the fluid space.

6. Arrangement according to one of Claims 2 to 5, in which there is a distance between the ultrasonic transducer (110) and the impedance discontinuity (106), and the control unit (120) is adapted to determine the concentration of the constituent (102) of the fluid mixture (101) as a function of a total path which is given by the distance and the number of reflections at the at least two impedance discontinuities (105; 106).

7. Arrangement according to one of Claims 2 to 6, in which the ultrasonic transducer (110) is arranged in such a way that the ultrasound pulse (104) is reflected at a wall (109) of the fluid space (103).

## Revendications

1. Procédé de détermination d'une concentration d'un élément constitutif (102) d'un mélange de fluide (101) dans un espace à fluide (103), comprenant :
- émission d'une impulsion ultrasonore (104) dans le mélange de fluide (101) au moyen d'un transducteur d'ultrasons (110),
- réception d'une réflexion (107) de l'impulsion ultrasonore (104) en tant que signal de mesure après que l'impulsion ultrasonore (104) ait été réfléchie au niveau d'au moins deux sauts d'impédance (105 ; 106),
- réception de la réflexion (107) après que l'impulsion ultrasonore (104) ait été réfléchie en alternance au moins 11 fois au total au niveau d'au moins deux sauts d'impédance (105 ; 106), la réflexion (107) ayant été réfléchie au niveau d'un réflecteur acoustique (108) en vue de l'amplification et le transducteur d'ultrasons (110) et le réflecteur acoustique (108) étant disposés sur des parois (109) opposées de l'espace à fluide (103), et
- détermination de la concentration de l'élément constitutif (102) du mélange de fluide (101) en fonction du signal de mesure.

2. Arrangement composé d'un transducteur d'ultrasons (110) et d'un réflecteur acoustique (108) à l'amplification de la réflexion, lesquels sont disposés sur des parois (109) opposées d'un espace à fluide (103), et d'une unité de commande (120) destinée à faire fonctionner le transducteur d'ultrasons (110), l'arrangement étant conçu pour mettre en œuvre un procédé selon la revendication 1.

3. Arrangement selon la revendication 2, avec lequel les au moins deux sauts d'impédance (105 ; 106) sont disposés de telle sorte que l'impulsion ultrasonore (104) est réfléchie au niveau du saut d'impédance (106) de sorte qu'après la réflexion sur le saut d'impédance (106), l'impulsion ultrasonore (104) vient frapper l'autre saut d'impédance (105).

4. Arrangement selon la revendication 2 ou 3, avec lequel les au moins deux sauts d'impédance (105 ; 106) sont disposés de telle sorte que l'impulsion ultrasonore (104) est réfléchie au niveau de l'autre saut d'impédance (105) de sorte qu'après la réflexion sur l'autre saut d'impédance (105), l'impulsion ultrasonore (104) vient de nouveau frapper le saut d'impédance (106) .

5. Arrangement selon l'une des revendications 2 à 4, avec lequel l'impulsion ultrasonore (104) est émise par le transducteur d'ultrasons (110) qui est disposé au niveau de l'espace à fluide (103) et la réflexion (107) est reçue par le transducteur d'ultrasons (110), l'autre saut d'impédance (105) étant disposé dans l'espace à fluide localement dans une zone du transducteur d'ultrasons (110).

6. Arrangement selon l'une des revendications 2 à 5, avec lequel un écart est présent entre le transducteur d'ultrasons (110) et le saut d'impédance (106) et l'unité de commande (120) est conçue pour déterminer la concentration de l'élément constitutif (102) du mélange de fluide (101) en fonction d'une course totale qui résulte de l'écart et du nombre de réflexion au niveau des au moins deux sauts d'impédance (105 ; 106).

7. Arrangement selon l'une des revendications 2 à 6, avec lequel le transducteur d'ultrasons (110) est disposé de telle sorte que l'impulsion ultrasonore (104) est réfléchie sur une paroi (109) de l'espace à fluide (103).
